(19) Europäisches Patentamt / European Patent Office / Office européen des brevets

(11) **EP 3 277 942 B1**

(12) **FASCICULE DE BREVET EUROPEEN**

(45) Date de publication et mention
de la délivrance du brevet:
**20.02.2019 Bulletin 2019/08**

(51) Int Cl.:
*F02C 9/18* [(2006.01)]     *F02K 3/075* [(2006.01)]
*F02C 6/08* [(2006.01)]

(21) Numéro de dépôt: **16721861.9**

(22) Date de dépôt: **31.03.2016**

(86) Numéro de dépôt international:
**PCT/FR2016/050716**

(87) Numéro de publication internationale:
**WO 2016/156739 (06.10.2016 Gazette 2016/40)**

(54) **CONDUIT DE VEINE DE DÉCHARGE D'UNE TURBOMACHINE COMPRENANT UNE GRILLE VBV À CALAGE VARIABLE**

ABLASSKANAL EINES TURBINENMOTORS MIT EINEM VBV-GITTER MIT VARIABLEN EINSTELLUNGEN

DISCHARGE FLOW DUCT OF A TURBINE ENGINE COMPRISING A VBV GRATING WITH VARIABLE SETTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2015 FR 1552808**

(43) Date de publication de la demande:
**07.02.2018 Bulletin 2018/06**

(73) Titulaire: **SAFRAN AIRCRAFT ENGINES**
**75015 Paris (FR)**

(72) Inventeurs:
• **BRUHAT, Jean-Frédéric Pierre, Joseph**
**77550 Moissy-Cramayel Cedex (FR)**
• **FESSOU, Philippe, Jacques, Pierre**
**77550 Moissy-Cramayel Cedex (FR)**
• **LUKOWSKI, Benjamin**
**77550 Moissy-Cramayel Cedex (FR)**

(74) Mandataire: **Regimbeau**
**20, rue de Chazelles**
**75847 Paris Cedex 17 (FR)**

(56) Documents cités:
**EP-A2- 2 431 591     EP-A2- 2 653 699**
**WO-A1-2014/051673   US-A1- 2010 180 573**

**Description**

DOMAINE DE L'INVENTION

L'invention concerne le domaine général des turbomachines à double flux, et plus particulièrement des vannes de décharge permettant la régulation de l'air en sortie d'un compresseur d'une telle turbomachine, les dites vannes étant parfois désignées par leur acronyme anglais VBV (pour Variable Bleed Valves).

ARRIERE-PLAN TECHNOLOGIQUE

Une turbomachine à double flux comprend généralement, d'amont en aval dans le sens de l'écoulement des gaz, une soufflante carénée, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

De façon connue en soi, la turbomachine comprend par ailleurs un carter intermédiaire, dont le moyeu est agencé entre le carter du compresseur basse pression et le carter du compresseur haute pression. Le carter intermédiaire comprend des vannes de décharge ou VBV, dont le rôle est de réguler le débit en entrée du compresseur haute pression afin notamment de limiter des risques de pompage du compresseur basse pression en évacuant une partie de l'air en dehors de l'espace d'écoulement primaire.

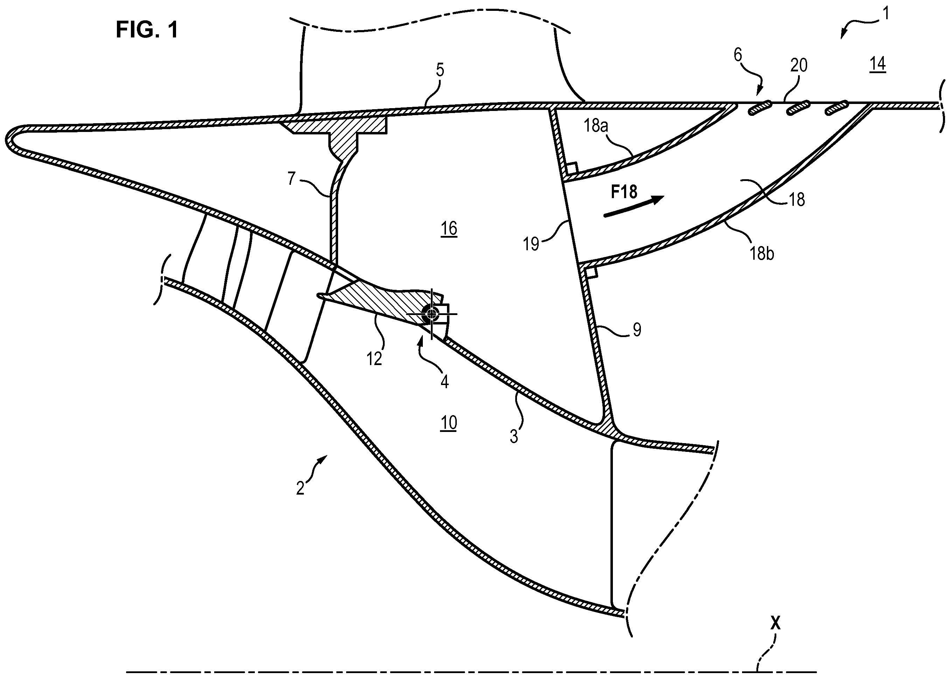

Comme l'illustre la figure 1, qui est une vue partielle en coupe axiale d'un turboréacteur d'avion à double corps et double flux d'un type connu, les moyeux 2 des carters intermédiaires comprennent habituellement deux viroles annulaires coaxiales, respectivement interne 3 et externe 5, reliées mutuellement par un flasque transversal amont 7 et par un flasque transversal aval 9.

Le flasque amont 7 est agencé en aval du compresseur basse pression tandis que le flasque aval 9 est agencé en amont du compresseur haute pression.

La virole interne 3 délimite extérieurement l'espace d'écoulement primaire 10 du flux primaire de la turbomachine et comporte des orifices 4 d'entrée d'air répartis circonférentiellement autour d'un axe X de la virole interne 3 (qui est coaxiale avec le moyeu 2), qui sont obturés par une vanne de décharge 12 correspondante destinée à la régulation du débit du compresseur haute pression.

Une telle vanne de décharge 12 peut prendre la forme d'une porte qui est montée pivotante sur la virole interne 3 entre une position de fermeture, dans laquelle la porte 12 ferme l'orifice d'entrée 4 correspondant et affleure la virole interne 3 du carter intermédiaire 1 en formant une surface sensiblement continue pour réduire au mieux les risques de perturbations aérodynamiques du flux primaire, et une position d'ouverture (voir figure 1), dans laquelle la porte 12 fait saillie radialement vers l'intérieur par rapport à la virole interne 3 et permet ainsi le prélèvement d'une partie du flux primaire dans l'espace d'écoulement primaire 10.

La virole externe 5 délimite quant à elle intérieurement l'espace d'écoulement secondaire 14 du flux secondaire de la turbomachine, et comporte des orifices 6 de sortie d'air agencés en aval du flasque transversal aval 9 et répartis circonférentiellement autour de l'axe X de la virole externe 5 (qui est coaxiale avec le moyeu 2).

Lorsque le débit d'air entrant dans le compresseur haute pression est réduit, un surplus d'air dans l'espace d'écoulement secondaire 14 peut alors être évacué par ces orifices de sortie 6, évitant ainsi des phénomènes de pompage pouvant conduire à une détérioration voire une destruction complète du compresseur basse pression.

La turbomachine comprend en outre des veines de décharge, formées entre les orifices d'entrée 4 et les orifices de sortie 6. Chaque veine de décharge est délimitée, d'amont en aval entre un orifice d'entrée 4 et un orifice de sortie 6 associés, par un espace intermédiaire annulaire 16, délimité par les viroles 3, 5 et les flasques transversaux 7, 9, puis par un conduit de veine de décharge 18 (connu également sous l'acronyme anglais de kit engine), configuré pour guider le flux de gaz jusqu'à l'espace d'écoulement secondaire 14. Le conduit de veine de décharge 18 comprend ainsi un orifice intermédiaire 19, qui débouche dans l'espace intermédiaire 16 au niveau de la surface amont du flasque transversal aval 9.

Les portes 12, les espaces intermédiaires 16 et les conduits 18 de veine de décharge associés forment ainsi ensemble un système d'évacuation d'air vers l'espace d'écoulement secondaire 14 de la turbomachine.

Le moyeu 2 du carter intermédiaire 1 comporte donc une pluralité de tels systèmes répartis autour de son axe X.

Par ailleurs, lorsqu'une porte 12 d'une vanne de décharge est en position ouverte, un flux de gaz écopé par celle-ci traverse l'espace intermédiaire 16, le conduit de veine de décharge 18 correspondant puis atteint l'espace d'écoulement secondaire 14 par l'intermédiaire d'une grille d'évacuation comprenant des ailettes 20, ou grille VBV. Les veines de décharge et les ailettes 20 des grilles VBV sont inclinées par rapport à la direction d'écoulement du flux secondaire, afin de rediriger le flux de gaz F18 en provenance de l'espace d'écoulement primaire et de l'aligner autant que possible avec celui du flux secondaire.

La Demanderesse s'est cependant aperçue que l'introduction du flux de gaz F18 en provenance de l'espace d'écoulement primaire 10 dans l'espace d'écoulement secondaire 14 causait des problèmes de décollement et de recirculation du flux, ce qui a tendance à diminuer le débit d'extraction.

Le document EP 2 431 591 décrit un moyeu de carter intermédiaire conforme au préambule de la revendication 1.

Le document WO 2014/051673 décrit quant à lui une conduite montée dans la nacelle centrale d'un moteur définissant un chemin d'un écoulement d'air de purge permettant de diriger de l'air de purge du moteur central dans le passage de dérivation. La conduite d'air de purge comprend une pluralité de profils aérodynamiques disposés à un angle de corde défini pour diriger l'écoulement d'air de purge dans le passage de dérivation afin de minimiser la perturbation de la dérivation de l'écoulement d'air.

RESUME DE L'INVENTION

Un objectif de l'invention est donc d'améliorer le débit d'extraction des vannes de décharge d'une turbomachine à double flux et de réduire les risques de décollement ou de recirculation du flux secondaire dans la veine secondaire de la turbomachine.

Pour cela, l'invention propose un moyeu de carter intermédiaire pour une turbomachine à double flux, ledit moyeu comprenant :

- une virole interne configurée pour délimiter un espace d'écoulement primaire du flux de gaz primaire de la turbomachine,
- une virole externe configurée pour délimiter un espace d'écoulement secondaire du flux de gaz secondaire de ladite turbomachine,
- un conduit de veine de décharge, s'étendant entre la virole interne et la virole externe, le conduit de veine de décharge débouchant dans l'espace d'écoulement secondaire à travers un orifice de sortie formé dans la virole externe, ledit orifice de sortie étant compris dans un plan de décharge sensiblement tangent à la virole externe, et
- des ailettes de décharge, fixées dans le conduit de veine de décharge au niveau de l'orifice de sortie de la virole externe.

Les ailettes de décharge comprennent par ailleurs, d'amont en aval dans le sens d'écoulement des gaz dans l'espace d'écoulement secondaire,

- une ailette amont, qui s'étend de façon adjacente à une paroi amont du conduit de veine de décharge et qui comprend un bord d'attaque disposé en regard d'un écoulement de gaz dans le conduit de veine de décharge et une paroi d'extrados, et
- une ailette aval, qui s'étend de façon adjacente à une paroi aval du conduit de veine de décharge et qui comprend un bord d'attaque et une paroi d'extrados.

De plus, un angle aigu amont entre le plan de décharge et une tangente au squelette au niveau du bord d'attaque de l'ailette amont est plus petit qu'un angle aigu aval entre le plan de décharge et une tangente au squelette au niveau du bord d'attaque de l'ailette aval.

Certaines caractéristiques préférées mais non limitatives du moyeu décrit ci-dessus sont les suivantes, prises individuellement ou en combinaison :

- l'angle aigu amont est sensiblement égal à un angle aigu entre la paroi amont du conduit de veine de décharge et le plan de décharge,
- l'angle aigu amont est compris entre 30° et 44°, de préférence entre 33° et 35°, par exemple de 34°,
- l'angle aigu aval est sensiblement égal à un angle aigu défini entre la paroi aval du conduit de veine de décharge et le plan de décharge,
- l'angle aigu aval est compris entre 40° et 50°, de préférence entre 43° et 45°, par exemple de 44°,
- les ailettes de décharge comprennent en outre une ailette supplémentaire comprenant un bord d'attaque et un bord de fuite, ladite ailette supplémentaire s'étendant entre l'ailette amont et l'ailette aval, et dans lequel un angle aigu entre le plan de décharge et une tangente au squelette au niveau du bord d'attaque de l'ailette supplémentaire est compris entre l'angle aigu aval et l'angle aigu amont, et/ou
- les ailettes de décharge comprennent n ailettes supplémentaires comprenant chacune un bord d'attaque et un squelette et réparties à intervalle régulier entre l'ailette amont et l'ailette aval, un angle aigu aval entre le plan de décharge et une tangente au squelette au niveau du bord d'attaque de la $i^{ème}$ ailette supplémentaire étant égal à :

$$\alpha_{i\_min} = i\frac{(\alpha_{aval} - \alpha_{amont})}{n+1} + \alpha_{amont}$$

où :

$\alpha_{i\_min}$ est l'angle aigu minimum de la $i^{ème}$ ailette supplémentaire
$\alpha_{amont}$ est l'angle aigu amont
$\alpha_{aval}$ est l'angle aigu aval,

- les ailettes de décharge présentent un squelette courbe,
- les ailettes de décharge présentent en outre un bord de fuite, opposé au bord d'attaque, et dans lequel un angle entre une tangente au squelette au niveau du bord de fuite des ailettes et le plan de décharge est égal à une moyenne entre un angle moyen aigu de l'écoulement de gaz dans le conduit de veine de décharge par rapport au plan de décharge et un angle entre une direction de l'écoulement du flux secondaire au niveau de l'orifice de sortie par rapport au plan de décharge :

$$\beta_{BF} = \frac{\gamma + \delta}{2}$$

où :

$\beta_{BF}$ est l'angle au niveau du bord de fuite
$\delta$ est l'angle moyen de l'écoulement dans le conduit de veine de décharge par rapport au plan de décharge, et
$\gamma$ est l'angle de la veine secondaire par rapport au plan de décharge.

Selon un deuxième aspect, l'invention propose également un carter intermédiaire pour une turbomachine à double flux comprenant un moyeu de carter intermédiaire comme décrit ci-dessus.

BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

La figure 1, qui a été décrite ci-dessus, est une vue en coupe axiale d'un moyeu pour carter intermédiaire connu de l'art antérieur,
La figure 2a illustre un exemple de réalisation d'un conduit de veine de décharge d'un moyeu de carter intermédiaire selon l'invention,
La figure 2b est une vue schématique d'un exemple de réalisation d'un conduit de veine de décharge d'un moyeu de carter intermédiaire selon l'invention, et
La figure 3 est une vue schématique en coupe d'un exemple de réalisation d'une ailette de décharge pouvant être utilisée dans l'invention.

DESCRIPTION DETAILLEE D'UN MODE DE REALISATION

Dans ce qui suit, un moyeu 2 de carter intermédiaire pour une turbomachine à double flux et un carter intermédiaire associé vont à présent être décrits en référence aux figures annexées.
Les pièces de moyeu 2 pour carter intermédiaire de l'art antérieur déjà décrites sont également présentes dans les modes de réalisations qui suivent.
En particulier, un moyeu 2 de carter intermédiaire conforme à l'invention comprend :

- une virole interne 3 configurée pour délimiter un espace d'écoulement primaire 10 du flux de gaz primaire de la turbomachine,
- une virole externe 5 configurée pour délimiter un espace d'écoulement secondaire 14 du flux de gaz secondaire de ladite turbomachine, et
- au moins un conduit de veine de décharge 18, s'étendant entre la virole interne 3 la virole externe 5.

La virole interne 3 et la virole externe 5 sont coaxiale avec l'axe X du moyeu 2.

Le conduit de veine de décharge 18 débouche dans l'espace d'écoulement primaire 10 à travers un orifice d'entrée 4 formé dans la virole interne 3 et dans l'espace d'écoulement secondaire 14 à travers un orifice de sortie 6 formé dans la virole externe 5. De préférence, le moyeu 2 de carter comprend une pluralité de conduits de veine de décharge 18, uniformément répartis entre la virole interne 3 et la virole externe 5.

L'orifice d'entrée 4, qui est formé dans la virole interne 3 du moyeu 2, peut être sélectivement ouvert ou fermé par une porte 12 en fonction des phases de vol de la turbomachine. De préférence, la porte 12 est mobile entre une position de fermeture, dans laquelle la porte 12 ferme l'orifice d'entrée 4, et une position d'ouverture, dans laquelle la porte 12 libère l'orifice d'entrée 4. Par exemple, la porte 12 peut être montée articulée sur la virole interne 3 ou comprendre une trappe à glissière.

Le conduit de veine de décharge 18 comprend par ailleurs une paroi amont 18a et une paroi aval 18b, qui s'étendent entre l'espace intermédiaire 16 et l'orifice de sortie 6. L'extrémité radialement externe de la paroi amont 18a affleure la virole externe 5, en amont de l'orifice 6 de sortie, tandis que l'extrémité radialement externe de la paroi aval 18b affleure la virole externe 5 en aval dudit orifice 6. La paroi amont 18a du conduit de veine de décharge 18 délimite par ailleurs la partie radialement extérieure du conduit 18, la paroi aval 18b délimitant sa partie radialement intérieure.

Le moyeu 2 comprend en outre une grille VBV comprenant un ensemble d'ailettes de décharge 20, fixées dans le conduit de veine de décharge 18 au niveau de l'orifice de sortie 6 et configurées pour orienter un flux de gaz de décharge F18 en provenance de l'espace d'écoulement primaire 10 et l'injecter dans l'espace d'écoulement secondaire 14 suivant une direction sensiblement parallèle à celle du flux secondaire F14, afin de réduire les pertes de charge dans l'espace d'écoulement secondaire 14.

Les ailettes de décharge 20 comprennent, d'amont en aval dans le sens d'écoulement des gaz dans l'espace d'écoulement secondaire 14, une ailette amont 22 et une ailette aval 24.

L'ailette amont 22 et l'ailette aval 24 comprennent chacune un bord d'attaque BA et un bord de fuite BF, opposé au bord d'attaque BA. Le bord d'attaque BA d'une ailette 22, 24 correspond à la partie antérieure de son profil aérodynamique. Il fait face au flux de gaz F18 et divise l'écoulement d'air en un écoulement d'air d'intrados et en un écoulement d'air extrados. Le bord de fuite BF quant à lui correspond à la partie postérieure du profil aérodynamique, où se rejoignent les écoulements intrados et extrados.

L'ailette amont 22 et l'ailette aval 24 présentent en outre chacune une paroi d'intrados I et une paroi d'extrados E, qui relient le bord d'attaque BA et le bord de fuite BF et sont parcourues par l'écoulement d'air d'intrados et d'extrados, respectivement.

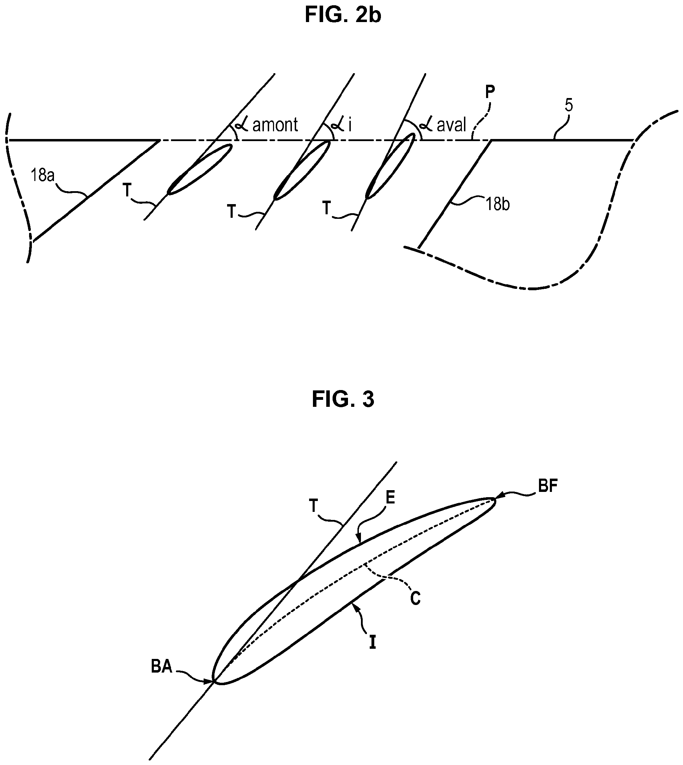

L'ailette amont 22 et l'ailette aval 24 sont adjacentes à la paroi amont 18a et à la paroi aval 18b, respectivement. La paroi amont 18a et la paroi aval 18b ne s'étendent généralement pas parallèlement dans la zone adjacente à la virole externe 5, comme schématisé sur la figure 2b. L'inclinaison de l'ailette amont 22 dans le conduit de veine de décharge est par ailleurs différente de celle de l'ailette aval 24, ce qui permet de réduire les risques de décollement ou de recirculation du flux secondaire F14 dans la veine secondaire.

Plus précisément, l'ailette amont 22 et l'ailette aval 24 sont orientées dans le conduit de veine de décharge 18 de sorte que l'angle $\alpha_{amont}$, dit angle amont, entre un plan de décharge P et une tangente T au squelette C au niveau du bord d'attaque BA de l'ailette amont 22 est différent de l'angle $\alpha_{aval}$, dit angle aval, entre le plan de décharge P et une tangente T au squelette C au niveau du bord d'attaque BA de l'ailette aval 24.

Par squelette C, on comprendra ici une ligne fictive qui comprend l'ensemble des points équidistants de la paroi d'extrados E et de la paroi d'intrados I d'une ailette donnée.

Par plan de décharge P, on comprendra ici un plan fictif tangent à la virole externe 5 au niveau de l'orifice de sortie 6. Le plan de décharge P intersecte donc la paroi amont 18a et la paroi aval 18b et comprend la section de sortie de la veine de décharge.

Les angles amont $\alpha_{amont}$ et aval $\alpha_{aval}$ ont été illustrés sur la figure 2b à titre indicatif. Ces angles sont aigus afin d'orienter le flux F18 en provenance du conduit de veine de décharge 18 et de l'aligner avec le flux secondaire F14.

On notera que les angles amont $\alpha_{amont}$ et aval $\alpha_{aval}$ correspondent à l'angle d'incidence du fluide, c'est-à-dire l'angle sous lequel le flux de gaz F18 dans le conduit de veine de décharge 18 voit l'ailette 22, 24 correspondante. Or, la direction d'écoulement du flux de gaz F18 dans le conduit 18 n'est pas constante entre la paroi amont 18a et la paroi aval 18b, en raison notamment de l'inclinaison du conduit de veine de décharge 18 par rapport à la direction d'écoulement du flux primaire et de l'inclinaison relative des parois amont 18a et aval 18b : c'est pourquoi l'adaptation de l'angle d'incidence des ailettes 22, 24 en fonction de leur position dans le conduit de veine de décharge 18 permet de réduire les risques de décollement en modifiant localement l'angle du flux F18 dans la zone des ailettes 22, 24 afin qu'il soit le plus proche possible de l'angle du flux F14, ce qui permet de limiter les pertes aérodynamiques.

Les Demanderesses se sont notamment aperçu que l'orientation locale du flux de gaz F18 au niveau de l'orifice de sortie 6 était plus inclinée au niveau de la paroi aval 18b que de la paroi amont 18a. L'angle aigu amont $\alpha_{amont}$ est donc de préférence plus petit que l'angle aigu aval $\alpha_{aval}$. Une telle orientation de l'ailette amont 22 et de l'ailette aval 24 permet ainsi d'améliorer la circulation du flux de gaz F18 au niveau de la grille VBV, et en particulier au niveau de l'ailette amont 22, mais permet en outre de dévier au mieux le flux de gaz F18 avant son entrée dans l'espace d'écoulement secondaire 14 afin de limiter les pertes aérodynamiques.

Dans une forme de réalisation, l'angle amont $\alpha_{amont}$ et l'angle aval $\alpha_{aval}$ sont choisis proches des angles d'inclinaison de la paroi amont 18a et de la paroi aval 18b, respectivement, par rapport au plan de décharge P.

L'angle aigu amont $\alpha_{amont}$ peut par exemple être compris entre 30° et 44°, de préférence entre 33° et 35°, par exemple de 35°.

L'angle aigu aval $\alpha_{aval}$ peut quant à lui être compris entre 40° et 50°, de préférence entre 43° et 45°, par exemple de 44°.

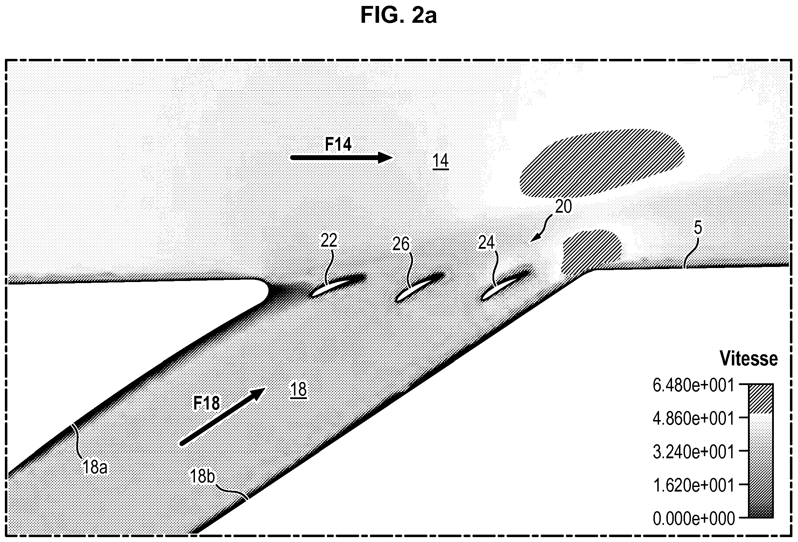

Les ailettes de décharge 20 peuvent en outre comprendre des ailettes supplémentaires 26, s'étendant entre l'ailette amont 22 et l'ailette aval 24. Les figures 2a et 2b annexées illustrent par exemple une grille VBV comprenant trois ailettes de décharge 22, 24, 26.

Ces ailettes supplémentaires 26 comprennent alors également chacune un bord d'attaque BA, un bord de fuite BF et des parois d'intrados I et d'extrados E.

Pour chacune des ailettes supplémentaires 26, l'angle $\alpha_i$ entre le plan de décharge P et la tangente T au squelette C au niveau du bord d'attaque BA de l'ailette supplémentaire 26 est de préférence compris entre l'angle amont $\alpha_{amont}$ et l'angle aval $\alpha_{aval}$.

Selon une première forme de réalisation, l'angle $\alpha_i$ peut être sensiblement égal à l'angle aval $\alpha_{aval}$. La Demanderesse s'est en effet aperçue que la réduction de l'angle amont $\alpha_{amont}$ par rapport à l'angle aval $\alpha_{aval}$ permettait déjà de réduire fortement les décollements du flux F18 lors de son introduction dans le flux 14.

Selon une deuxième forme de réalisation, l'angle $\alpha_i$ peut être compris entre l'angle amont $\alpha_{amont}$ et l'angle aval $\alpha_{aval}$. Par exemple, l'angle $\alpha_i$ des ailettes peut être progressivement incliné entre l'angle aval $\alpha_{aval}$ et l'angle amont $\alpha_{amont}$, en fonction de la position de chaque ailette supplémentaire 26 entre la paroi aval 18b et la paroi amont 18a, ce qui permet de tenir compte de l'inclinaison progressive du flux de gaz F18 dans le conduit de veine de décharge entre la paroi aval 18b et la paroi amont 18a.

Dans l'exemple de réalisation illustré sur les figures 2a et 2b, le conduit 18 comprend trois ailettes de décharge 20 : une ailette amont 22, une ailette aval 24 et une ailette supplémentaire 26, située à mi-distance entre l'ailette amont 22 et l'ailette aval 24. L'angle $\alpha_i$ est alors de préférence compris entre l'angle aval $\alpha_{aval}$ et l'angle amont $\alpha_{amont}$. Par exemple, pour un angle *aval* $\alpha_{aval}$ de 44°, et un angle amont $\alpha_{amont}$ de 34°, l'angle $\alpha_i$ peut par exemple être compris entre 34° et 44°, typiquement de 41°.

De manière générale, pour un conduit 18 comprenant *n* ailettes supplémentaires 26 et donc *n+2* ailettes de décharge 20, l'angle $\alpha_i$ de la *i*<sup>ème</sup> ailette supplémentaire 26 (la numérotation des ailettes supplémentaires 26 étant faite d'amont en aval dans le sens d'écoulement des gaz dans l'espace d'écoulement secondaire, et *i* étant compris entre 1 et *n*) peut être compris entre l'angle *aval* $\alpha_{aval}$ et un angle minimum $\alpha_{i\_min}$ tel que :

$$\alpha_{i\_min} = i\frac{(\alpha_{aval} - \alpha_{amont})}{n+1} + \alpha_{amont}$$

où :

$\alpha_{i\_min}$ est l'angle aigu minimum de la *i*<sup>ème</sup> ailette supplémentaire 26
$\alpha_{amont}$ est l'angle aigu amont
$\alpha_{aval}$ est l'angle aigu aval.

Ainsi, pour un conduit 18 comprenant quatre ailettes de décharge 20 avec un angle amont de 20° un angle aval de 50°, on obtient un angle $\alpha_{1min}$ de 30° pour la 1<sup>ère</sup> ailette supplémentaire 26 et un angle $\alpha_{2min}$ de 40° pour la 2<sup>ème</sup> ailette supplémentaire 26.

Une telle orientation permet ainsi d'orienter individuellement chaque ailette supplémentaire 26 en fonction de l'angle d'incidence local du flux de gaz F18 dans le conduit de veine de décharge 18.

Les ailettes de décharge 20 peuvent être droites, c'est-à-dire présenter une paroi d'intrados I et une paroi d'extrados E sensiblement planes et parallèles.

En variante, les ailettes de décharge 20 peuvent présenter un squelette C courbe, afin d'améliorer la déviation du flux de gaz F18 en provenance de l'espace d'écoulement primaire pour l'aligner avec le flux secondaire F14.

Par exemple, pour une ailette 22, 24, 26 donnée de la grille VBV, l'angle $\beta_{BFi}$ entre la tangente T au squelette C au niveau du bord de fuite BF de l'ailette 22, 24, 26 et le plan de décharge P peut être égal à la moyenne de l'angle de l'écoulement local $\delta_i$ (au niveau de l'ailette considérée) du flux de gaz F18 dans le conduit de veine de décharge 18 par rapport au plan de décharge P et l'angle $\gamma$ entre la direction de l'écoulement de la veine secondaire et le plan de décharge P, au niveau de l'orifice de sortie 6.

Ainsi, l'angle $\beta_{BFi}$ d'une ailette 20 donnée peut être défini comme suit :

$$\beta_{BFi} = \frac{\delta_i + \gamma}{2}$$

On obtient alors, pour chaque ailette 22, 24, 26, un squelette C courbe spécifique.

De manière alternative, les ailettes de décharge 20 d'une grille VBV donnée peuvent être identiques, afin de simplifier notamment la fabrication du moyeu 2 et de réduire son coût de fabrication. A cet effet, quelle que soit l'ailette 22, 24, 26 de la grille VBV, un angle moyen $\delta$, correspondant à la moyenne des angles de l'écoulement local du flux de gaz F18 dans le conduit de veine de décharge 18, est déterminé, cet angle étant alors utilisé pour déterminer l'angle $\beta_{BF}$ pour toutes les ailettes 20 :

$$\beta_{BF} = \frac{\delta + \gamma}{2}$$

On notera que l'angle moyen $\delta$, l'angle local $\delta_i$ et l'angle $\gamma$ de la direction du flux secondaire 14 sont des angles aigus.

L'angle moyen $\delta$ peut par exemple être déterminé en effectuant une moyenne des angles locaux $\delta_i$. On comprendra bien entendu que la mesure des angles $\delta_i$ n'est effectuée que lorsque la veine décharge est débitante, c'est-à-dire lorsque la turbomachine est en régime transitoire (principalement au décollage et à l'atterrissage) et que la porte 12 est en position ouverte pour prélever une partie du gaz dans l'espace d'écoulement primaire 10. Or, lorsque la veine de décharge est débitante, l'écoulement du flux de gaz F18 dans le conduit de veine de décharge 18 est sensiblement constant et reproductible : la détermination des angles locaux $\delta_i$ est donc une mesure reproductible, à 2° près.

En première approximation, l'angle moyen $\delta$ peut être approximé à la moyenne des angles locaux au niveau de l'ailette amont 22 et de l'ailette aval 24.

On pourra notamment partir d'un profil aérodynamique du type NACA (acronyme anglais de National Advisory Committee for Aeronautics pour Comité Consultatif National pour l'Aéronautique) afin de dimensionner les ailettes de décharge en fonction de leur angle $\beta_{BFi}$ ou $\beta_{BF}$, par exemple un profil dy type NACA54115.

## Revendications

**1.** Moyeu (2) de carter intermédiaire (1) pour une turbomachine à double flux, ledit moyeu (2) comprenant :

- une virole interne (3) configurée pour délimiter extérieurement un espace d'écoulement primaire (10) du flux de gaz primaire de la turbomachine,
- une virole externe (5) configurée pour délimiter intérieurement un espace d'écoulement secondaire (14) du flux de gaz secondaire (F14) de ladite turbomachine,
- au moins un conduit de veine de décharge (18), s'étendant entre la virole interne (3) et la virole externe (5), le conduit de veine de décharge (18) débouchant dans l'espace d'écoulement secondaire (14) à travers un orifice de sortie (6) formé dans la virole externe (5), ledit orifice de sortie (6) étant compris dans un plan de décharge (P) sensiblement tangent à la virole externe (5), et
- des ailettes de décharge (20), fixées dans le conduit de veine de décharge (18) au niveau de l'orifice de sortie (6) de la virole externe (5) lesdites ailettes de décharge (20) comprenant, d'amont en aval dans le sens d'écoulement des gaz dans l'espace d'écoulement secondaire (14), une ailette amont (22), s'étendant de façon adjacente à une paroi amont (18a) du conduit de veine de décharge (18) et comprenant un bord d'attaque (BA) disposé en regard d'un écoulement de gaz (F18) dans le conduit de veine de décharge (18) et un squelette (C), et une ailette aval (24), s'étendant de façon adjacente à une paroi aval (18b) du conduit de veine de décharge (18) et comprenant un bord d'attaque (BA) et un squelette (C),

le moyeu (2) de carter intermédiaire étant **caractérisé en ce qu'**un angle aigu amont ($\alpha_{amont}$) entre le plan de décharge (P) et une tangente (T) au squelette (C) au niveau du bord d'attaque (BA) de l'ailette amont (20) est plus petit qu'un angle aigu aval ($\alpha_{aval}$) entre le plan de décharge (P) et une tangente (T) au squelette (C) au niveau du bord d'attaque (BA) de l'ailette aval (24).

**2.** Moyeu (2) selon la revendication 1, dans lequel l'angle aigu amont ($\alpha_{amont}$) est sensiblement égal à un angle aigu entre la paroi amont (18a) du conduit de veine de décharge (18) et le plan de décharge (P).

**3.** Moyeu (2) selon la revendication 2, dans lequel l'angle aigu amont ($\alpha_{amont}$) est compris entre 30° et 44°, de préférence entre 33° et 35°, par exemple de 34°.

**4.** Moyeu (2) selon l'une des revendications 1 à 3, dans lequel l'angle aigu aval ($\alpha_{aval}$) est sensiblement égal à un angle aigu défini entre la paroi aval (18b) du conduit de veine de décharge (18) et le plan de décharge (P).

**5.** Moyeu (2) selon la revendication 4, dans lequel l'angle aigu aval est compris entre 40° et 50°, de préférence entre 43° et 45°, par exemple de 44°.

**6.** Moyeu (2) selon l'une des revendications 1 à 5, dans lequel les ailettes de décharge comprennent en outre une ailette supplémentaire (26) comprenant un bord d'attaque (BA) et un bord de fuite (BF), ladite ailette supplémentaire (26) s'étendant entre l'ailette amont (20) et l'ailette aval (24), et dans lequel un angle aigu entre le plan de décharge (P) et une tangente (T) au squelette (C) au niveau du bord d'attaque (BA) de l'ailette supplémentaire (26) est compris entre l'angle aigu aval ($\alpha_{aval}$) et l'angle aigu amont ($\alpha_{amont}$).

**7.** Moyeu (2) selon l'une des revendications 1 à 5, dans lequel les ailettes de décharge comprennent *n* ailettes supplémentaires (26) comprenant chacune un bord d'attaque (BA) et un squelette (C) et réparties à intervalle régulier entre l'ailette amont (20) et l'ailette aval (24), un angle aigu aval ($\alpha_i$) entre le plan de décharge (P) et une tangente (T) au squelette (C) au niveau du bord d'attaque (BA) de la $i^{ème}$ ailette supplémentaire (26) étant égal à :

$$\alpha_{i\_min} = i\frac{(\alpha_{aval} - \alpha_{amont})}{n+1} + \alpha_{amont}$$

où :

$\alpha_{i\_min}$ est l'angle aigu minimum de la $i^{ème}$ ailette supplémentaire (26)
$\alpha_{amont}$ est l'angle aigu amont
$\alpha_{aval}$ est l'angle aigu aval.

**8.** Moyeu (2) selon l'une des revendications 1 à 7, dans lequel les ailettes de décharge (20) présentent un squelette (C) courbe.

**9.** Moyeu (2) selon la revendication 8, dans lequel les ailettes de décharge (20) présentent en outre un bord de fuite (BF), opposé au bord d'attaque (BA), et dans lequel un angle ($\beta_{BF}$) entre une tangente (T) au squelette (C) au niveau du bord de fuite (BF) des ailettes (20) et le plan de décharge (P) est égal à une moyenne entre un angle moyen ($\delta$) aigu de l'écoulement de gaz dans le conduit de veine de décharge (18) par rapport au plan de décharge (P) et un angle ($\gamma$) entre une direction de l'écoulement du flux secondaire (F14) au niveau de l'orifice de sortie (6) par rapport au plan de décharge (P) :

$$\beta_{BF} = \frac{\gamma + \delta}{2}$$

où :

$\beta_{BF}$ est l'angle au niveau du bord de fuite
$\delta$ est l'angle moyen de l'écoulement dans le conduit de veine de décharge par rapport au plan de décharge (P), et
$\gamma$ est l'angle de la veine secondaire par rapport au plan de décharge (P).

**10.** Carter intermédiaire (1) pour une turbomachine à double flux comprenant un moyeu (2) de carter intermédiaire (1) selon l'une des revendications 1 à 9.

**Patentansprüche**

1. Nabe (2) eines Zwischengehäuses (1) für eine Doppelstrom-Turbomaschine, wobei die Nabe (2) Folgendes umfasst:

  - einen Innenmantel (3), der so konfiguriert ist, dass er einen Primärströmungsbereich (10) für den Primärgasstrom der Turbomaschine nach außen abgrenzt,
  - einen Außenmantel (5), der so konfiguriert ist, dass er einen Sekundärströmungsbereich (14) für den Sekundärgasstrom (F14) der Turbomaschine nach innen abgrenzt,
  - zumindest eine Abblasekanalleitung (18), die sich zwischen dem Innenmantel (3) und dem Außenmantel (5) erstreckt, wobei die Abblasekanalleitung (18) durch eine im Außenmantel (5) ausgebildete Auslassöffnung (6) in den Sekundärströmungsbereich (14) führt, wobei die Auslassöffnung (6) in einer Entladungsebene (P) eingefasst ist, die im Wesentlichen tangential zum Außenmantel (5) verläuft, und
  - Entladungsrippen (20), die in der Abblasekanalleitung (18) an der Auslassöffnung (6) des Außenmantels (5) befestigt sind, wobei die Entladungsrippen (20) von stromaufwärts nach stromabwärts in Gasströmungsrichtung im Sekundärströmungsbereich (14) eine stromaufwärtige Rippe (22) umfassen, die sich anschließend an eine stromaufwärtige Wand (18a) der Abblasekanalleitung (18) erstreckt, und eine Vorderkante (VK), die einem Gasstrom (F18) in der Abblasekanalleitung (18) und einem Skelett (C) zugewandt angeordnet ist, und eine stromabwärtige Rippe (24) umfasst, die sich anschließend an eine stromabwärtige Wand (18b) der Abblasekanalleitung (18) erstreckt und eine Vorderkante (VK) und ein Skelett (C) umfasst,

  wobei die Zwischengehäusenabe (2) **dadurch gekennzeichnet ist, dass** ein stromaufwärtiger spitzer Winkel ($\alpha_{aufwärts}$) zwischen der Entladungsebene (P) und einer Tangente (T) zum Skelett (C) an der Vorderkante (VK) der stromaufwärtigen Entladungsrippe (20) kleiner ist als ein stromabwärtiger spitzer Winkel ($\alpha_{abwärts}$) zwischen der Entladungsebene (P) und einer Tangente (T) zum Skelett (C) an der Vorderkante (VK) der stromabwärtigen Rippe (24).

2. Nabe (2) nach Anspruch 1, wobei der stromaufwärtige spitze Winkel ($\alpha_{aufwärts}$) im Wesentlichen gleich einem spitzen Winkel zwischen der stromaufwärtigen Wand (18a) der Abblasekanalleitung (18) und der Entladungsebene (P) ist.

3. Nabe (2) nach Anspruch 2, wobei der stromaufwärtige spitze Winkel ($\alpha_{aufwärts}$) zwischen 30° und 44°, vorzugsweise zwischen 33° und 35°, zum Beispiel bei 34°, liegt.

4. Nabe (2) nach einem der Ansprüche 1 bis 3, wobei der stromabwärtige spitze Winkel ($\alpha_{abwärts}$) im Wesentlichen gleich einem spitzen Winkel ist, der zwischen der stromabwärtigen Wand (18b) der Abblasekanalleitung (18) und der Entladungsebene (P) definiert ist.

5. Nabe (2) nach Anspruch 4, wobei der stromabwärtige spitze Winkel zwischen 40° und 50°, vorzugsweise zwischen 43° und 45°, zum Beispiel bei 44°, liegt.

6. Nabe (2) nach einem der Ansprüche 1 bis 5, wobei die Entladungsrippen ferner eine zusätzliche Rippe (26) mit einer Vorderkante (VK) und einer Hinterkante (HK) umfassen, wobei sich die zusätzliche Rippe (26) zwischen der stromaufwärtigen Rippe (20) und der stromabwärtigen Rippe (24) erstreckt, und wobei ein spitzer Winkel zwischen der Entladungsebene (P) und einer Tangente (T) zum Skelett (C) an der Vorderkante (VK) der zusätzlichen Rippe (26) zwischen dem stromabwärtigen spitzen Winkel ($\alpha_{abwärts}$) und dem stromaufwärtigen spitzen Winkel ($\alpha_{aufwärts}$) liegt.

7. Nabe (2) nach einem der Ansprüche 1 bis 5, wobei die Entladungsrippen $n$ zusätzliche Rippen (26) umfassen, die jeweils eine Vorderkante (VK) und ein Skelett (C) umfassen und in regelmäßigen Abständen zwischen der stromaufwärtigen Rippe (20) und der stromabwärtigen Rippe (24) verteilt sind, wobei ein spitzer stromabwärtiger Winkel ($\alpha_i$) zwischen der Entladungsebene (P) und einer Tangente (T) zum Skelett (C) an der Vorderkante (VK) der I. zusätzlichen Rippe (26) gleich ist:

$$\alpha_{i_{min}} = i \frac{\left( \alpha_{abwärts} - \alpha_{aufwärts} \right)}{n + 1} + \alpha_{aufwärts}$$

wobei:

$\alpha_{i_{min}}$ der minimale spitze Winkel der *I.* zusätzlichen Rippe (26) ist,
$\alpha_{aufwärts}$ der stromaufwärtige spitze Winkel ist,
$\alpha_{abwärts}$ der stromabwärtige spitze Winkel ist.

8. Nabe (2) nach einem der Ansprüche 1 bis 7, wobei die Entladungsrippen (20) ein gekrümmtes Skelett (C) aufweisen.

9. Nabe (2) nach Anspruch 8, wobei die Entladungsrippen (20) ferner eine der Vorderkante (VK) entgegengesetzte Hinterkante (HK) aufweisen, und wobei ein Winkel ($\beta_{HK}$) zwischen einer Tangente (T) zum Skelett (C) an der Hinterkante (HK) der Rippen (20) und der Entladungsebene (P) gleich einem Mittelwert zwischen einem mittleren spitzen Winkel ($\delta$) des Gasstroms in der Abblasekanalleitung (18) im Verhältnis zur Entladungsebene (P) und einem Winkel ($\gamma$) zwischen einer Strömungsrichtung des Sekundärstroms (F14) an der Auslassöffnung (6) im Verhältnis zur Entladungsebene (P) ist:

$$\beta_{HK} = \frac{\gamma + \delta}{2}$$

wobei:

$\beta_{HK}$ der Winkel an der Hinterkante ist,
$\delta$ der mittlere Winkel der Strömung in der Abblasekanalleitung im Verhältnis zur Entladungsebene (P) ist, und
$\gamma$ der Winkel der sekundären Abblasekanalleitung im Verhältnis zur Entladungsebene (P) ist.

10. Zwischengehäuse (1) für eine Doppelstrom-Turbomaschine, umfassend eine Nabe (2) eines Zwischengehäuses (1) nach einem der Ansprüche 1 bis 9.


**Claims**

1. A hub (2) of an intermediate casing (1) for a turbofan engine, said hub (2) comprising:

   - an inner shroud (3) configured to externally delimit a primary flow space (10) of the primary gas stream of the turbomachine,
   - an outer shroud (5) configured to internally delimit a secondary flow space (14) of the secondary gas stream (F14) of said turbomachine,
   - at least one discharge flow path duct (18) extending between the inner shroud (3) and the outer shroud (5), the discharge flow path duct (18) opening into the secondary flow space (14) through an outlet orifice (6) formed in the outer shroud (5), said outlet orifice (6) being comprised in a discharge plane (P) substantially tangent to the outer shroud (5), and
   - discharge fins (20) fixed in the discharge flow path duct (18) at the outlet orifice (6) of the outer shroud (5), said discharge fins (20) comprising, from upstream to downstream in the direction of gas flow into the secondary flow space (14), an upstream fin (22) extending adjacent to an upstream wall (18a) of the discharge flow path duct (18) and comprising a leading edge (LE) disposed opposite a gas flow (F18) into the discharge flow path duct (18) and a skeleton (C), and a downstream fin (24) extending adjacent to a downstream wall (18b) of the discharge flow path duct (18) and comprising a leading edge (LE) and a skeleton (C), the intermediate casing hub (2) being **characterized in that** an upstream acute angle ($\alpha_{upstream}$) between the discharge plane (P) and a tangent (T) to the skeleton (C) at the leading edge (LE) of the upstream fin (20) is smaller than a downstream acute angle ($\alpha_{downstream}$) between the discharge plane (P) and a tangent (T) to the skeleton (C) at the leading edge (LE) of the downstream fin (24).

2. The hub (2) according to claim 1, wherein the upstream acute angle ($\alpha_{upstream}$) is substantially equal to an acute angle between the upstream wall (18a) of the discharge flow path duct (18) and the discharge plane (P).

3. The hub (2) according to claim 2, wherein the upstream acute angle ($\alpha_{upstream}$) is comprised between 30° and 44°, preferably between 33° and 35°, for example 34°.

4. The hub (2) according to any of claims 1 to 3, wherein the downstream acute angle ($\alpha_{downstream}$) is substantially equal to a acute angle defined between the downstream wall (18b) of the discharge flow path duct (18) and the discharge plane (P).

5. The hub (2) according to claim 4, wherein the downstream acute angle is comprised between 40° and 50°, preferably between 43° and 45°, for example 44°.

6. The hub (2) according to any of claims 1 to 5, wherein the discharge fins further comprise an additional fin (26) comprising a leading edge (LE) and a trailing edge (TE), said additional fin (26) extending between the upstream fin (20) and the downstream fin (24), and wherein an acute angle between the discharge plane (P) and a tangent (T) to the skeleton (C) at the leading edge (LE) of the additional fin (26) is comprised between the downstream acute angle ($\alpha_{downstream}$) and the upstream acute angle ($\alpha_{upstream}$).

7. The hub (2) according to any of claims 1 to 5, wherein the discharge fins comprise *n* additional fins (26) each comprising a leading edge (LE) and a skeleton (C) and distributed at regular intervals between the upstream fin (20) and the downstream fin (24), a downstream acute angle ($\alpha_i$) between the discharge plane (P) and a tangent (T) to the skeleton (C) at the leading edge (LE) of the *i*th additional fin (26) being equal to:

$$\alpha_{i_{min}} = i \frac{\left( \alpha_{downstream} - \alpha_{upstream} \right)}{n+1} + \alpha_{upstream}$$

wherein:

$\alpha_{i_{min}}$ is the minimum acute angle of the *i*th additional fin (26)
$\alpha_{upstream}$ is the upstream acute angle
$\alpha_{downstream}$ is the downstream acute angle.

8. The hub (2) according to any of claims 1 to 7, wherein the discharge fins (20) have a curved skeleton (C).

9. The hub (2) according to claim 8, wherein the discharge fins (20) further have a trailing edge (TE), opposite the leading edge (LE), and wherein an angle ($\beta_{TE}$) between a tangent (T) to the skeleton (C) at the trailing edge (TE) of the fins (20) and the discharge plane (P) is equal to an average between an average acute angle ($\delta$) of the gas flow into the discharge flow path duct (18) with respect to the discharge plane (P) and an angle ($\gamma$) between a flow direction of the secondary stream (F14) at the outlet orifice (6) with respect to the discharge plane (P):

$$\beta_{TE} = \frac{\gamma + \delta}{2}$$

wherein:

$\beta_{TE}$ is the angle at the trailing edge
$\delta$ is the average angle of the flow into the discharge flow path duct with respect to the discharge plane (P), and
$\gamma$ is the angle of the secondary flow path with respect to the discharge plane (P).

10. An intermediate casing (1) for a turbofan engine comprising an intermediate casing (1) hub (2) according to any of claims 1 to 9.

FIG. 1

EP 3 277 942 B1

12

# FIG. 2a

F14 →  14

20

22    26    24    5

F18 →  18

18a

18b

Vitesse

6.480e+001
4.860e+001
3.240e+001
1.620e+001
0.000e+000

EP 3 277 942 B1

## FIG. 2b

## FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2431591 A
- WO 2014051673 A